# EUROPÄISCHE PATENTSCHRIFT

(11) **EP 3 546 906 B1**
(45) Veröffentlichungstag und Bekanntmachung des Hinweises auf die Patenterteilung: **11.11.2020**
(21) Anmeldenummer: 19159557.8
(22) Anmeldetag: 27.02.2019
(51) Int. Cl.: G01K 1/08, B22D 2/00, G01K 11/32

(54) **TEMPERATURSENSORANORDNUNG, TEMPERATURSENSORBAUTEIL FÜR EINE METALLURGISCHE ANLAGE UND VERFAHREN ZUM HERSTELLEN EINES SOLCHEN**
TEMPERATURE SENSOR ASSEMBLY, TEMPERATURE SENSOR COMPONENT FOR A METALLURGICAL INSTALLATION AND METHOD FOR MANUFACTURING THE SAME
AGENCEMENT DE CAPTEUR DE TEMPÉRATURE, COMPOSANT DE CAPTEUR DE TEMPÉRATURE POUR UNE INSTALLATION MÉTALLURGIQUE ET PROCÉDÉ DE FABRICATION D'UN TEL COMPOSANT

(30) Priorität: 29.03.2018 DE 102018204880; 20.08.2018 DE 102018213977
(43) Veröffentlichungstag der Anmeldung: 02.10.2019
(73) Patentinhaber: SMS Group GmbH, 40237 Düsseldorf (DE)
(72) Erfinder: Lieftucht, Dirk, 40237 Düsseldorf (DE); Klyscz, Patrick, 40822 Mettmann (DE)
(74) Vertreter: Klüppel, Walter

(56) Entgegenhaltungen:
- DE-A1-102009 060 639
- US-A1- 2015 198 195
- US-A1- 2018 050 387

## Beschreibung

Temperatursensorbauteil für eine metallurgische Anlage und Verfahren zum Herstellen eines solchen.

Die Erfindung betrifft ein Temperatursensorbauteil für eine metallurgische Anlage, aufweisend wenigstens eine Sensorbohrung an einem Bauteilabschnitt des Temperatursensorbauteils und wenigstens eine zumindest teilweise in die Sensorbohrung eingeführte Temperatursensoranordnung zum Messen einer Temperatur des Bauteilabschnitts, wobei die Temperatursensoranordnung wenigstens einen Lichtwellenleiter, wenigstens ein den Lichtwellenleiter mit radialem Spiel umlaufend umschließendes Schutzrohr, das zusammen mit dem darin eingeführten Lichtwellenleiter in die Sensorbohrung einführbar ist, und wenigstens einen in die Sensorbohrung einführbaren Fixierbolzen aufweist, wobei der Fixierbolzen wenigstens eine eben ausgebildete Längsseite aufweist. Des Weiteren betrifft die Erfindung ein Verfahren zum Herstellen eines Temperatursensorbauteils für eine metallurgische Anlage.

Für eine Überwachung eines Bauteils einer metallurgischen Anlage sind unter anderem die Temperatur des Bauteils und der Wärmestrom durch das Bauteil von Interesse. Der Wärmestrom kann aufgrund eines ermittelten Temperaturgradienten in einem Bereich des Bauteils bestimmt werden. Die Ermittlung des Temperaturgradienten kann grundsätzlich stattfinden, indem die Temperaturen an zwei Orten gemessen werden, die in einem definierten Abstand zueinander angeordnet sind. Hierzu werden üblicherweise Thermoelemente einzeln in dafür vorgesehene Sensorbohrungen an dem Bauteil eingesetzt. Diese technische Lösung ist stets für den speziellen Einzelfall anzufertigen bzw. kundenspezifisch.

EP 2 483 650 B1 offenbart ein Bauteil einer metallurgischen Anlage mit einem Sensorelement zur Messung eines Temperaturgradienten in einer Messrichtung, wobei das Sensorelement in einer Sensorbohrung im Bauteil angeordnet ist und einen zylindrischen Grundkörper aufweist, an dem in definiertem Abstand mindestens zwei Lichtwellenleiter zur Temperaturmessung angeordnet sind. Der Grundkörper weist eine längliche Stabform mit einer Mittenachse auf, wobei der Grundkörper zumeist zwei diametral gegenüberliegende, parallel zueinander verlaufende Nuten aufweist und die Lichtwellenleiter jeweils in den in Richtung der Mittenachse verlaufenden Nuten angeordnet sind. Jeder Lichtwellenleiter kann in einem den Lichtwellenleiter umlaufend umschließenden Rohr angeordnet sein.

Nachteilig bei diesem Bauteil ist, dass die Lichtwellenleiter ohne Anpresskraft in Richtung der Bohrungswand der Sensorbohrung in den Nuten angeordnet sind, was zu einer unsicheren bzw. unzuverlässigen Weiterleitung eines Temperatursignals durch den jeweiligen Lichtwellenleiter führen kann. Zudem ist die Herstellung des Grundkörpers mit schlankem Schaft und großem Kopf relativ aufwändig, insbesondere da hierzu eine Zerspanungsarbeit erforderlich ist.

EP 3 281 722 A1 offenbart eine Form zum kontinuierlichen Gießen, aufweisend einen Hauptkörper und eine Temperaturerfassungseinheit, die in eine Sensorbohrung eingesetzt ist, die in dem Hauptkörper ausgebildet ist, und die eine Temperatur innerhalb der Form erfasst. Die Temperaturerfassungseinheit weist einen FBG(Faser-Bragg-Gitter)-Sensor auf, der in ein Schutzrohr eingesetzt ist, das in einer radialen Richtung verformt werden kann. Des Weiteren weist die Temperaturerfassungseinheit ein Stützelement auf, in dem eine Nut entlang einer Längsrichtung ausgebildet ist und das den FBG-Sensor entlang der Längsrichtung trägt. An dem Stützelement ist umlaufend ein elastisch verformbares Element angeordnet, das das Schutzrohr mit dem darin angeordneten FBG-Sensor gegen die Bohrungswand der Sensorbohrung drückt, um das Schutzrohr zu fixieren.

Das Stützelement ist eine kostenintensive Sonderanfertigung, da die Nut in einen entsprechenden Bolzen eingebracht werden muss. Zusätzlich muss das elastisch verformbare Element hergestellt und an dem Stützelement angebracht werden, was den Herstellungs- und Montageaufwand erhöht. Zudem kann bei der Einbringung der Temperaturerfassungseinheit in die Sensorbohrung nicht ausreichend sichergestellt werden, dass das Schutzrohr radial außen zu der Nut gegen die Bohrungswand der Sensorbohrung in Richtung der Heißseite der Form gedrückt wird. Es ist keine feste Positionierung des Schutzrohrs in Richtung der Heißseite gegeben. Des Weiteren kann das Schutzrohr auf Höhe der Nut jederzeit axial verschoben werden, was insbesondere bei der Montage der Form unkontrolliert auftreten und zu deutlichen Temperaturfehlern führen kann.

US 2015 / 0 198 195 A1 offenbart ein Befestigungsmittel mit einem Kopf, einem Schaft, der eine Außenfläche und einen sich axial erstreckenden Kanal in der Außenfläche aufweist, und einem optisch durchlässigen, verformungsempfindlichen Material, das den Kanal ausfüllt.

Ferner ist es bekannt, zur Temperaturerfassung an einem Bauteil einer metallurgischen Anlage ein Rohr in eine dafür vorgesehene Sensorbohrung einzufügen, in das ein Schutzrohr koaxial eingefügt ist, in das wiederum ein FBG-Lichtwellenleiter koaxial eingefügt ist.

Nachteilig ist hierbei, dass weniger als 50% des Wärmesignals den FBG-Lichtwellenleiter erreichen, da der Wärmeübertragungswiderstand zwischen der Sensorbohrung und dem Rohr sowie zwischen dem Rohr und dem Schutzrohr sehr groß ist. Zudem ist beim Einsatz einer solchen technischen Lösung mit hohen Totzeiten bei der Temperaturerfassung zu rechnen. Daher ist diese technische Lösung nicht geeignet, dynamische Effekte, wie etwa die Fehlerbilder Längsriss und Kleber, bei ihrer Entstehung beispielsweise in einer Kokille zu erkennen. Dies sind jedoch die Hauptaufgaben im Bereich der Temperaturüberwachung einer Kokille. Eine Aufgabe der Erfindung ist es, eine kostengünstigere und sicherere Lösung zum Fixieren eines einen Lichtwellenleiter enthaltenden Schutzrohrs an einer Bohrungswand einer an einem Bauteil einer metallurgischen Anlage ausgebildeten Sensorbohrung bereitzustellen.

Diese Aufgabe wird durch die unabhängigen Patentansprüche gelöst. Vorteilhafte Ausgestaltungen sind in der nachfolgenden Beschreibung, den abhängigen Patentansprüchen und der Figur wiedergegeben, wobei diese Ausgestaltungen jeweils für sich genommen oder in Kombination von wenigstens zwei dieser Ausgestaltungen miteinander einen weiterbildenden, insbesondere auch bevorzugten oder vorteilhaften, Aspekt der Erfindung darstellen können. Ausgestaltungen des Temperatursensorbauteils können dabei Ausgestaltungen des Verfahrens entsprechen, und umgekehrt, selbst wenn im Folgenden hierauf im Einzelfall nicht explizit hingewiesen wird.

Ein erfindungsgemäßes Temperatursensorbauteil für eine metallurgische Anlage weist wenigstens eine Sensorbohrung an einem Bauteilabschnitt des Temperatursensorbauteils und wenigstens eine zumindest teilweise in die Sensorbohrung eingeführte Temperatursensoranordnung zum Messen einer Temperatur des Bauteilabschnitts auf, wobei die Temperatursensoranordnung wenigstens einen Lichtwellenleiter, wenigstens ein den Lichtwellenleiter mit radialem Spiel umlaufend umschließendes Schutzrohr, das zusammen mit dem darin eingeführten Lichtwellenleiter in die Sensorbohrung einführbar ist, und wenigstens einen in die Sensorbohrung einführbaren Fixierbolzen auf, wobei der Fixierbolzen wenigstens eine eben ausgebildete Längsseite aufweist und derart ausgebildet ist, dass der Fixierbolzen derart formschlüssig in die Sensorbohrung einführbar ist, dass die Längsseite einer Heißseite des Bauteilabschnitts zugewandt ist; und dass die Längsränder der Längsseite durchgehend in körperlichem Kontakt mit einer die Sensorbohrung umgebenden Bohrungswand des Bauteilabschnitts stehen, wobei ein Außendurchmesser des Schutzrohrs und eine sich in Längsrichtung des Fixierbolzens erstreckende Außenkontur des Fixierbolzens derart aufeinander abgestimmt sind, dass das in die Sensorbohrung eingeführte Schutzrohr bei formschlüssig in die Sensorbohrung eingeführtem Fixierbolzen zwischen der Längsseite und der Bohrungswand eingespannt ist.

Die Bohrungswand ist die Wand der Sensorbohrung.

Die Erfindung stellt eine Lösung zum sicheren Fixieren der aus dem Lichtwellenleiter und dem diesen aufnehmenden Schutzrohr gebildeten Temperatursensorbaugruppe mittels des Fixierbolzens an einer Bohrungswand der Sensorbohrung in Richtung der Heißseite des die Sensorbohrung aufweisenden Bauteilabschnitts dar. Hierbei wird durch die formschlüssige Verbindung zwischen dem in die Sensorbohrung eingefügten Fixierbolzen und der Sensorbohrung bzw. dem diese definierenden Bauteilabschnitt sichergestellt, dass sich die Temperatursensorbaugruppe ausschließlich entlang der der Heißseite des Bauteilabschnitts zugewandten Längsseite des Fixierbolzens erstreckt, da die Temperatursensorbaugruppe nicht über eine mit der Bohrungswand der Sensorbohrung in Kontakt stehende Ecke des Fixierbolzens rutschen kann. Durch das Einspannen der Temperatursensorbaugruppe zwischen dem in die Sensorbohrung eingeführten Fixierbolzen und der Sensorbohrung kann zudem sichergestellt werden, dass der in die Sensorbohrung eingeführte Abschnitt der Temperatursensorbaugruppe über seine gesamte Länge gleichmäßig gegen die Bohrungswand der Sensorbohrung gedrückt wird.

Der Lichtwellenleiter weist eine optische Faser auf, die mit einem elektronischen Temperaturerfassungssystem verbunden sein kann, das die von dem Lichtwellenleiter erzeugten Sensorsignale auswertet bzw. verarbeitet. Die von dem Lichtwellenleiter erzeugten Sensorsignale werden mittels des Temperaturerfassungssystems in Temperaturen umgerechnet und können den jeweiligen Messorten zugeordnet werden. Die Auswertung der Sensorsignale kann beispielsweise nach dem sogenannten Faser-Bragg-Gitter-Verfahren (FBG-Verfahren) erfolgen, bei dem ein Lichtwellenleiter verwendet wird, dem Messstellen mit einer periodischen Variation des Brechungsindexes bzw. Gitters eingeprägt sind. Diese periodische Variation des Brechungsindexes führt dazu, dass der Lichtwellenleiter in Abhängigkeit der Periodizität für bestimmte Wellenlängen an den Messstellen einen dielektrischen Spiegel darstellt. Durch eine Temperaturänderung an einem Punkt wird die Bragg-Wellenlänge verändert, wobei genau diese reflektiert wird. Licht, das die Bragg-Bedingung nicht erfüllt, wird durch das Bragg-Gitter nicht wesentlich beeinflusst. Die verschiedenen Sensorsignale der unterschiedlichen Messstellen können dann aufgrund von Laufzeitunterschieden voneinander unterschieden werden. Der detaillierte Aufbau solcher Faser-Bragg-Gitter sowie die entsprechenden Auswerteeinheiten sind bekannt. Die Genauigkeit der Ortsauflösung ist durch die Anzahl der eingeprägten Messstellen gegeben. Die Größe einer Messstelle kann beispielsweise im Bereich von 1 mm bis 5 mm liegen. Mittels des Temperaturerfassungssystems kann ein Laserlicht erzeugt werden, das in den Lichtwellenleiter eingespeist wird.

Alternativ kann zur Messung der Temperatur auch das "Optical-Frequency-Domain-Reflectometry"-Verfahren (OFDR-Verfahren) oder das "Optical-Time-Domain-Reflectometry"-Verfahren (OTDR-Verfahren) eingesetzt werden. Diese Verfahren basieren auf dem Prinzip der faseroptischen Raman-Rückstreuung, wobei ausgenutzt wird, dass eine Temperaturveränderung am Punkt eines Lichtleiters eine Veränderung der Raman-Rückstreuung des Lichtwellenleitermaterials verursacht. Mittels des Temperaturerfassungssystems können dann die Temperaturwerte entlang einer optischen Faser ortsaufgelöst bestimmt werden, wobei bei diesem Verfahren über eine bestimmte Länge des Leiters gemittelt wird. Diese Länge beträgt ungefähr einige Zentimeter. Die verschiedenen Messstellen werden wiederum durch Laufzeitunterschiede voneinander getrennt. Der Aufbau solcher Systeme zur Auswertung nach den genannten Verfahren ist bekannt, ebenso wie die nötigen Laser, die das Laserlicht in einen Lichtwellenleiters einspeisen.

Das Schutzrohr kann teilweise oder vollständig aus einem Kunststoff, beispielsweise einem Elastomer, einem metallischen Werkstoff oder einem Verbundwerkstoff hergestellt sein. Durch das Einspannen des Schutzrohrs zwischen dem in die Sensorbohrung eingefügten Fixierbolzen und der Bohrungswand der Sensorbohrung kann das Schutzrohr elastisch radial verformt bzw. komprimiert werden. Damit hierbei der Lichtwellenleiter nicht eingespannt und/oder verformt wird, ist der Lichtwellenleiter mit radialem Spiel in dem Schutzrohr aufgenommen.

Der Fixierbolzen ist vorzugsweise einstückig bzw. monolithisch ausgebildet. Der Fixierbolzen kann teilweise oder vollständig aus einem Kunststoff, einem metallischen Werkstoff oder einem Verbundwerkstoff hergestellt sein. Ein aus einem Metall oder einer Metalllegierung hergestellter Fixierbolzen kann beispielsweise durch ein Tiefziehverfahren oder ein Walzverfahren hergestellt sein, ohne dass zusätzlich eine Zerspanungsarbeit erforderlich ist. Hierdurch kann die erfindungsgemäße Temperatursensoranordnung kostengünstig hergestellt werden. Dieser Vorteil kann zusätzlich dadurch verstärkt werden, wenn als Fixierbolzen ein direkt im Handel erhältliches Halbzeug bzw. Normteil verwendet wird. Der Fixierbolzen kann sehr schlank ausgebildet sein, um den Wärmefluss durch den Bauteilabschnitt möglichst wenig durch den Wärmewiderstand des Fixierbolzens zu reduzieren.

Das Bauteil kann ein Bauteil einer Gießkokille für den Strangguss oder den Blockguss sein. Beim Strangguss kann der Bauteilabschnitt des Bauteils eine Kupferplatte der Kokille oder ein Bauteilabschnitt eines Gießrohrs sein. Die Temperatursensoranordnung kann aber auch in anderen Bereichen eingesetzt werden, bei denen eine Temperaturmessung mit Hilfe eines Lichtwellenleiters erfolgen soll. Beispielsweise kann die Temperatursensoranordnung zur Temperaturüberwachung von Kühldüsenblöcken, Plattenkühlern aus Kupfer von Elektroöfen, Abstichöffnungen aus Kupfer von Elektroöfen und dergleichen eingesetzt werden.

Gemäß einer vorteilhaften Ausgestaltung weist der Fixierbolzen eine polygonale, insbesondere rechteckige oder quadratische, Querschnittsfläche auf. Fixierbolzen mit einer rechteckigen oder quadratischen Querschnittsfläche sind einfach beschaffbar bzw. herstellbar. Bei einem Fixierbolzen mit quadratischer Querschnittsfläche entspricht eine Länge einer Diagonale der quadratischen Querschnittsfläche einem Durchmesser der Sensorbohrung.

Die Sensorbohrung weist vorzugsweise eine kreisförmige Querschnittsfläche auf.

Gemäß einer vorteilhaften Ausgestaltung weist das Schutzrohr eine kreisringförmige Querschnittsfläche auf, wobei ein Außenradius des Schutzrohrs größer als ein bezüglich einer Längsmittelachse der Sensorbohrung gegebener größter radialer Abstand zwischen der Längsseite des Fixierbolzens und der Bohrungswand. Hierdurch wird das Schutzrohr radial komprimiert, wenn es zusammen mit dem Fixierbolzen mit quadratischer Querschnittsfläche in die Sensorbohrung eingeführt ist. Bei einem Fixierbolzen mit quadratischer Querschnittsfläche kann beispielsweise eine Differenz zwischen einem Radius der Sensorbohrung und einer halben Seitenlänge einer Seite der quadratischen Querschnittsfläche des Fixierbolzens sein.

Gemäß einer weiteren vorteilhaften Ausgestaltung ist die Sensorbohrung als Sackbohrung ausgebildet, wobei eine axiale Länge des Fixierbolzens und/oder des Lichtwellenleiters und/oder des Schutzrohrs größer als eine Tiefe der Sensorbohrung ist. Hierdurch ist die Temperatursensoranordnung außerhalb der Sensorbohrung leicht zugänglich und manuell oder mit einem Werkzeug erfassbar, so dass die Temperatursensoranordnung auf einfache Art und Weise aus der Sensorbohrung entfernt bzw. ausgetauscht werden kann. Die Ausbildung der Sensorbohrung als Sackbohrung ermöglicht zudem eine korrekte Höhenpositionierung der Temperatursensorbaugruppe in der Sensorbohrung.

Gemäß einer weiteren vorteilhaften Ausgestaltung ist die Sensorbohrung als Stufentiefbohrung mit wenigstens zwei axial über eine umlaufend angeordnete und radial nach innen weisende Stufe aneinander angrenzenden Bohrungsabschnitten ausgebildet, wobei sich die Bohrungsabschnitte in ihren Durchmessern derart voneinander unterscheiden, dass ein Durchmesser eines näher an einer Bohrungsöffnung, die an einer Außenseite des Temperatursensorbauteils angeordnet ist, der Sensorbohrung angeordneten Bohrungsabschnitts größer als ein Durchmesser eines sich auf einer der Bohrungsöffnung abgewandten Seite dieses Bohrungsabschnitts angeordneten weiteren Bohrungsabschnitts ist. Die einzelnen Bohrabschnitte werden mit Bohrern mit entsprechend verschiedenen Durchmessern hergestellt, was sicherstellt, dass bei voller Bohrtiefe nicht über die vollständige Längs des momentan benutzten Bohrers eine Reibung mit dem Bauteilabschnitt gegeben ist. Durch diese Reduzierung der Reibung wird ein Abbrechen des Bohrers durch Überlast vermieden. Die Sensorbohrung ist somit kostengünstiger herstellbar. Die Sensorbohrung kann beispielsweise drei oder vier entsprechende Bohrungsabschnitte aufweisen, wobei sich die Durchmesser von axial benachbarten Bohrungsabschnitten beispielsweise um hundertstel mm voneinander unterscheiden können.

Gemäß einer weiteren vorteilhaften Ausgestaltung ist eine Differenz zwischen einem größten Durchmesser eines Bohrungsabschnitts und einem kleinsten Durchmesser eines weiteren Bohrungsabschnitts kleiner als ein Ausmaß einer radialen Komprimierung des zwischen die Längsseite des Fixierbolzens und die Sensorbohrung eingespannten Schutzrohrs. Dies stellt ein vollständiges Anliegen der Temperatursensorbaugruppe an der Bohrungswand der Sensorbohrung sicher, um die Übertragung der Temperaturinformationen sicherer zu machen.

Ein erfindungsgemäßes Verfahren zum Herstellen eines Temperatursensorbauteils für eine metallurgische Anlage umfasst die Schritte:
- Bereitstellen von wenigstens einem metallischen Bauteil;
- Bereitstellen von wenigstens einer Temperatursensoranordnung mit wenigstens einem formschlüssig in eine Sensorbohrung an einem Bauteilabschnitt des Bauteils einführbaren Fixierbolzen, der wenigstens eine eben ausgebildete Längsseite aufweist, wenigstens einem Lichtwellenleiter und wenigstens einem den Lichtwellenleiter mit radialem Spiel umlaufend umschließenden Schutzrohr, das zusammen mit dem darin eingeführten Lichtwellenleiter in die Sensorbohrung einführbar ist, wobei der Fixierbolzen ausgebildet ist, dass der Fixierbolzen derart formschlüssig in die Sensorbohrung einführbar ist, dass die Längsseite einer Heißseite des Bauteilabschnitts zugewandt ist und Längsränder der Längsseite durchgehend in körperlichem Kontakt mit einer die Sensorbohrung umgebenden Bohrungswand des Bauteilabschnitts stehen, wobei ein Außendurchmesser des Schutzrohrs und eine sich in Längsrichtung des Fixierbolzens erstreckende Außenkontur des Fixierbolzens derart aufeinander abgestimmt sind, dass das in die Sensorbohrung eingeführte Schutzrohr bei formschlüssig in die Sensorbohrung eingeführtem Fixierbolzen zwischen der Längsseite und der Bohrungswand eingespannt wird;

- Ausbilden von wenigstens einer Sensorbohrung an dem Bauteilabschnitt; und
- zumindest teilweises Einführen der Temperatursensoranordnung in die Sensorbohrung, wobei der Fixierbolzen und die Temperatursensoranordnung gleichzeitig oder nacheinander in die Sensorbohrung eingeführt werden.

Mit dem Verfahren sind die oben mit Bezug auf die Temperatursensoranordnung bzw. das Temperatursensorbauteil genannten Vorteile entsprechend verbunden. Das metallische Bauteil bzw. der Bauteilabschnitt kann beispielsweise aus Kupfer hergestellt werden.

Gemäß einer vorteilhaften Ausgestaltung wird die Sensorbohrung als Sackbohrung ausgebildet, wobei eine axiale Länge des Fixierbolzens und/oder des Lichtwellenleiters und/oder des Schutzrohrs derart gewählt werden bzw. wird, dass die axiale Länge größer als eine Tiefe der Sensorbohrung ist. Mit dieser Ausgestaltung sind die oben mit Bezug auf die entsprechende Ausgestaltung des Temperatursensorbauteils genannten Vorteile entsprechend verbunden.

Gemäß einer weiteren vorteilhaften Ausgestaltung wird die Sensorbohrung als Stufentiefbohrung mit wenigstens zwei axial über eine umlaufend angeordnete und radial nach innen weisende Stufe aneinander angrenzenden Bohrungsabschnitten ausgebildet, wobei sich die Bohrungsabschnitte in ihren Durchmessern derart voneinander unterscheiden, dass ein Durchmesser eines näher an einer Bohrungsöffnung, die an einer Außenseite des Temperatursensorbauteils angeordnet ist, der Sensorbohrung angeordneten Bohrungsabschnitts größer als ein Durchmesser eines sich auf einer der Bohrungsöffnung abgewandten Seite dieses Bohrungsabschnitts angeordneten weiteren Bohrungsabschnitts ist. Mit dieser Ausgestaltung sind die oben mit Bezug auf die entsprechende Ausgestaltung des Temperatursensorbauteils genannten Vorteile entsprechend verbunden.

Gemäß einer weiteren vorteilhaften Ausgestaltung werden die Bohrungsabschnitte derart ausgebildet, dass eine Differenz zwischen einem größten Durchmesser eines Bohrungsabschnitts und einem kleinsten Durchmesser eines weiteren Bohrungsabschnitts kleiner als ein Ausmaß einer radialen Komprimierung des zwischen die Längsseite des Fixierbolzens und die Sensorbohrung eingespannten Schutzrohrs ist. Mit dieser Ausgestaltung sind die oben mit Bezug auf die entsprechende Ausgestaltung des Temperatursensorbauteils genannten Vorteile entsprechend verbunden.

Im Folgenden wird die Erfindung unter Bezugnahme auf die anliegende Figur anhand einer bevorzugten Ausführungsform beispielhaft erläutert, wobei die nachfolgend erläuterten Merkmale sowohl jeweils für sich genommen als auch in Kombination von wenigstens zwei dieser Merkmale miteinander einen vorteilhaften oder weiterbildenden Aspekt der Erfindung darstellen können. Es zeigt:

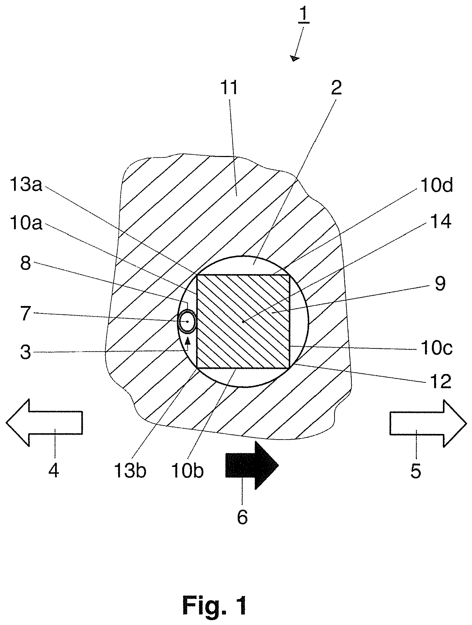

- Figur 1:: eine schematische Schnittdarstellung eines Ausführungsbeispiels für ein erfindungsgemäßes Temperatursensorbauteil.

Figur 1 zeigt eine schematische Schnittdarstellung eines Ausführungsbeispiels für ein erfindungsgemäßes Temperatursensorbauteil 1 für eine nicht gezeigte metallurgische Anlage.

Das Temperatursensorbauteil 1 weist einen als Kupferplatte ausgebildeten Bauteilabschnitt 11, wenigstens eine in dem Bauteilabschnitt 1 ausgebildete Sensorbohrung 2 mit kreisförmiger Querschnittsfläche und wenigstens eine zumindest teilweise in die Sensorbohrung 2 eingeführte Temperatursensoranordnung 3 zum Messen einer Temperatur eines die Sensorbohrung 2 aufweisenden Bauteilabschnitts des Temperatursensorbauteils 1 auf. Ein Pfeil 4 zeigt in Richtung einer Heißseite des Temperatursensorbauteils 1 und ein Pfeil 5 zeigt in Richtung einer Kaltseite des Temperatursensorbauteils 1. Ein Wärmestrom durch das Temperatursensorbauteil 1 ist durch einen Pfeil 6 angedeutet. Die Sensorbohrung 2 ist von einer Bohrungswand 12 des Bauteilabschnitts 11 umgeben.

Die Temperatursensoranordnung 3 weist einen Lichtwellenleiter 7 und ein den Lichtwellenleiter 7 mit radialem Spiel umlaufend umschließendes Schutzrohr 8 auf, das zusammen mit dem darin eingeführten Lichtwellenleiter 7 in die Sensorbohrung 2 an dem Bauteilabschnitt 11 eingeführt ist.

Des Weiteren weist die Temperatursensoranordnung 3 einen formschlüssig in die Sensorbohrung 2 eingeführten Fixierbolzen 9 mit quadratischer Querschnittsfläche auf. Der Fixierbolzen 9 weist vier eben ausgebildete Längsseiten 10a, 10b, 10c und 10d auf. Der Fixierbolzen 9 ist derart ausgebildet ist, dass der Fixierbolzen 9 derart formschlüssig in die Sensorbohrung 2 eingeführt ist, dass die Längsseite 10a einer Heißseite des Bauteilabschnitts (11) zugewandt ist und Längsränder 13a und 13b der Längsseite 10a durchgehend in körperlichem Kontakt mit der die Sensorbohrung (2) umgebenden Bohrungswand 12 des Bauteilabschnitts 11 stehen.

Ein Außendurchmesser des Schutzrohrs 8 und eine sich in Längsrichtung des Fixierbolzens 9 erstreckende Außenkontur des Fixierbolzens 9 sind derart aufeinander abgestimmt, dass das in die Sensorbohrung 2 eingeführte Schutzrohr 8 bei formschlüssig in die Sensorbohrung 2 eingeführtem Fixierbolzen 9 zwischen der Längsseite 10a und der Bohrungswand 12 eingespannt ist, wie es in Fig. 1 gezeigt ist. Hierbei weist das Schutzrohr 8 eine kreisringförmige Querschnittsfläche auf, wobei ein Außenradius des Schutzrohrs 8 größer als ein bezüglich einer Längsmittelachse 14 der Sensorbohrung 2 gegebener größter radialer Abstand zwischen der Längsseite 10a des Fixierbolzens 9 und der Bohrungswand 12 ist. Insbesondere ist der Außenradius des Schutzrohrs 8 größer als eine Differenz zwischen einem Radius der Sensorbohrung 2 und einer halben Breite der Längsseite 10a des Fixierbolzens 9.

Die Sensorbohrung 2 ist als Sackbohrung ausgebildet, wobei eine axiale Länge des Fixierbolzens 9, des Lichtwellenleiters 7 und des Schutzrohrs 8 größer als eine Tiefe der Sensorbohrung 2 ist.

Insbesondere ist die Sensorbohrung 2 als Stufentiefbohrung mit wenigstens zwei axial über eine umlaufend angeordnete und radial nach innen weisende, nicht gezeigte Stufe aneinander angrenzenden, nicht gezeigten Bohrungsabschnitten ausgebildet. Die Bohrungsabschnitte unterscheiden sich in ihren Durchmessern derart voneinander, dass ein Durchmesser eines näher an einer nicht gezeigten Bohrungsöffnung, die an einer nicht gezeigten Außenseite des Temperatursensorbauteils 1 angeordnet ist, der Sensorbohrung 2 angeordneten, nicht gezeigten Bohrungsabschnitts größer als ein Durchmesser eines sich auf einer der Bohrungsöffnung abgewandten Seite dieses Bohrungsabschnitts angeordneten, nicht gezeigten weiteren Bohrungsabschnitts ist. Dabei ist eine Differenz zwischen einem größten Durchmesser eines Bohrungsabschnitts und einem kleinsten Durchmesser eines weiteren Bohrungsabschnitts kleiner ist als ein Ausmaß einer radialen Komprimierung des zwischen die Längsseite des Fixierbolzens 9 und die Sensorbohrung 2 eingespannten Schutzrohrs 8.

### Bezugszeichenliste

- 1: Temperatursensorbauteil
- 2: Sensorbohrung
- 3: Temperatursensoranordnung
- 4: Pfeil (Heißseite von 1)
- 5: Pfeil (Kaltseite von 1)
- 6: Pfeil (Wärmestrom durch 1)
- 7: Lichtwellenleiter
- 8: Schutzrohr
- 9: Fixierbolzen
- 10: Längsseite von 9
- 11: Bauteilabschnitt
- 12: Bohrungswand von 11
- 13a: Längsrand von 10a
- 13b: Längsrand von 10a
- 14: Längsmittelachse von 2

## Patentansprüche

1. Temperatursensorbauteil (1) für eine metallurgische Anlage, aufweisend wenigstens eine Sensorbohrung (2) an einem Bauteilabschnitt (11) des Temperatursensorbauteils (1) und wenigstens eine zumindest teilweise in die Sensorbohrung (2) eingeführte Temperatursensoranordnung (3) zum Messen einer Temperatur des Bauteilabschnitts (11), wobei die Temperatursensoranordnung (3) wenigstens einen Lichtwellenleiter (7), wenigstens ein den Lichtwellenleiter (7) mit radialem Spiel umlaufend umschließendes Schutzrohr (8), das zusammen mit dem darin eingeführten Lichtwellenleiter (7) in die Sensorbohrung (2) einführbar ist, und wenigstens einen in die Sensorbohrung (2) einführbaren Fixierbolzen (9) aufweist, wobei der Fixierbolzen (9) wenigstens eine eben ausgebildete Längsseite (10a, 10b, 10c, 10d) aufweist, **dadurch gekennzeichnet, dass** der Fixierbolzen (9) derart ausgebildet ist, dass der Fixierbolzen (9) derart formschlüssig in die Sensorbohrung (2) einführbar ist, dass die Längsseite (10a) einer Heißseite des Bauteilabschnitts (11) zugewandt ist, und dass die Längsränder (13a, 13b) der Längsseite (10a) durchgehend in körperlichem Kontakt mit einer die Sensorbohrung (2) umgebenden Bohrungswand (12) des Bauteilabschnitts (11) stehen, wobei ein Außendurchmesser des Schutzrohrs (8) und eine sich in Längsrichtung des Fixierbolzens (9) erstreckende Außenkontur des Fixierbolzens (9) derart aufeinander abgestimmt sind, dass das in die Sensorbohrung (2) eingeführte Schutzrohr (8) bei formschlüssig in die Sensorbohrung (2) eingeführtem Fixierbolzen (9) zwischen der Längsseite (10a) und der Bohrungswand (12) eingespannt ist.

2. Temperatursensorbauteil (1) nach Anspruch 1, **dadurch gekennzeichnet, dass** der Fixierbolzen (9) eine polygonale, insbesondere rechteckige oder quadratische, Querschnittsfläche aufweist.

3. Temperatursensorbauteil (1) nach Anspruch 1 oder 2, **dadurch gekennzeichnet, dass** das Schutzrohr (8) eine kreisringförmige Querschnittsfläche aufweist und dass ein Außenradius des Schutzrohrs (8) größer als ein bezüglich einer Längsmittelachse der Sensorbohrung (2) gegebener größter radialer Abstand zwischen der Längsseite (10a) des Fixierbolzens (9) und der Bohrungswand (12) ist.

4. Temperatursensorbauteil (1) nach einem der Ansprüche 1 bis 3, **dadurch gekennzeichnet, dass** die Sensorbohrung (2) als Sackbohrung ausgebildet ist und dass eine axiale Länge des Fixierbolzens (9) und/oder des Lichtwellenleiters (7) und/oder des Schutzrohrs (8) größer als eine Tiefe der Sensorbohrung (2) ist.

5. Temperatursensorbauteil (1) nach einem der Ansprüche 1 bis 4, **dadurch gekennzeichnet, dass** die Sensorbohrung (2) als Stufentiefbohrung mit wenigstens zwei axial über eine umlaufend angeordnete und radial nach innen weisende Stufe aneinander angrenzenden Bohrungsabschnitten ausgebildet ist, wobei sich die Bohrungsabschnitte in ihren Durchmessern derart voneinander unterscheiden, dass ein Durchmesser eines näher an einer Bohrungsöffnung, die an einer Außenseite des Temperatursensorbauteils (1) angeordnet ist, der Sensorbohrung (2) angeordneten Bohrungsabschnitts größer als ein Durchmesser eines sich auf einer der Bohrungsöffnung abgewandten Seite dieses Bohrungsabschnitts angeordneten weiteren Bohrungsabschnitts ist.

6. Temperatursensorbauteil (1) nach Anspruch 5, **dadurch gekennzeichnet, dass** eine Differenz zwischen einem größten Durchmesser eines Bohrungsabschnitts und einem kleinsten Durchmesser eines weiteren Bohrungsabschnitts kleiner als ein Ausmaß einer radialen Komprimierung des zwischen die Längsseite (10a) des Fixierbolzens (9) und die Sensorbohrung (2) eingespannten Schutzrohrs (8) ist.

7. Verfahren zum Herstellen eines Temperatursensorbauteils (1) für eine metallurgische Anlage, aufweisend die Schritte:
- Bereitstellen von wenigstens einem metallischen Bauteil;
- Bereitstellen von wenigstens einer Temperatursensoranordnung (3) mit wenigstens einem formschlüssig in eine Sensorbohrung (2) an einem Bauteilabschnitt (11) des Bauteils einführbaren Fixierbolzen (9), der wenigstens eine eben ausgebildete Längsseite (10a, 10b, 10c, 10d) aufweist, wenigstens einem Lichtwellenleiter (7) und wenigstens einem den Lichtwellenleiter (7) mit radialem Spiel umlaufend umschließenden Schutzrohr (8), das zusammen mit dem darin eingeführten Lichtwellenleiter (7) in die Sensorbohrung (2) einführbar ist, wobei der Fixierbolzen (9) ausgebildet ist, dass der Fixierbolzen (9) derart formschlüssig in die Sensorbohrung (2) einführbar ist, dass die Längsseite (10a) einer Heißseite des Bauteilabschnitts (11) zugewandt ist und Längsränder (13a, 13b) der Längsseite (10a) durchgehend in körperlichem Kontakt mit einer die Sensorbohrung (2) umgebenden Bohrungswand (12) des Bauteilabschnitts (11) stehen, wobei ein Außendurchmesser des Schutzrohrs (8) und eine sich in Längsrichtung des Fixierbolzens (9) erstreckende Außenkontur des Fixierbolzens (9) derart aufeinander abgestimmt sind, dass das in die Sensorbohrung (2) eingeführte Schutzrohr (8) bei formschlüssig in die Sensorbohrung (2) eingeführtem Fixierbolzen (9) zwischen der Längsseite (10a) und der Bohrungswand (12) eingespannt wird;
- Ausbilden von wenigstens einer Sensorbohrung (2) an dem Bauteilabschnitt (11); und
- zumindest teilweises Einführen der Temperatursensoranordnung (3) in die Sensorbohrung (2), wobei der Fixierbolzen (9) und die Temperatursensoranordnung (3) gleichzeitig oder nacheinander in die Sensorbohrung (2) eingeführt werden.

8. Verfahren nach Anspruch 7, **dadurch gekennzeichnet, dass** die Sensorbohrung (2) als Sackbohrung ausgebildet wird und dass eine axiale Länge des Fixierbolzens (9) und/oder des Lichtwellenleiters (7) und/oder des Schutzrohrs (8) derart gewählt werden bzw. wird, dass die axiale Länge größer als eine Tiefe der Sensorbohrung (2) ist.

9. Verfahren nach Anspruch 7 oder 8, **dadurch gekennzeichnet, dass** die Sensorbohrung (2) als Stufentiefbohrung mit wenigstens zwei axial über eine umlaufend angeordnete und radial nach innen weisende Stufe aneinander angrenzenden Bohrungsabschnitten ausgebildet wird, wobei sich die Bohrungsabschnitte in ihren Durchmessern derart voneinander unterscheiden, dass ein Durchmesser eines näher an einer Bohrungsöffnung, die an einer Außenseite des Temperatursensorbauteils (1) angeordnet ist, der Sensorbohrung (2) angeordneten Bohrungsabschnitts größer als ein Durchmesser eines sich auf einer der Bohrungsöffnung abgewandten Seite dieses Bohrungsabschnitts angeordneten weiteren Bohrungsabschnitts ist.

10. Verfahren nach Anspruch 9, **dadurch gekennzeichnet, dass** die Bohrungsabschnitte derart ausgebildet werden, dass eine Differenz zwischen einem größten Durchmesser eines Bohrungsabschnitts und einem kleinsten Durchmesser eines weiteren Bohrungsabschnitts kleiner als ein Ausmaß einer radialen Komprimierung des zwischen die Längsseite (10a) des Fixierbolzens (9) und die Sensorbohrung (2) eingespannten Schutzrohrs (8) ist.

## Claims

1. Temperature sensor component (1) for a metallurgical plant, comprising at least one sensor bore (2) at a component section (11) of the temperature sensor component (1) and at least one temperature sensor arrangement (3), which is introduced at least partly into the sensor bore (2), for measuring a temperature of the component section (11), wherein the temperature sensor arrangement (3) comprises at least one optical waveguide (7), at least one protective tube (8), which surrounds the optical waveguide (7) with radial play in encircling manner and which together with the optical waveguide (7) introduced thereinto is introducible into the sensor bore (2), and at least one fixing bolt (9) introducible into the sensor bore (2), wherein the fixing bolt (9) has at least one longitudinal side (10a, 10b, 10c, 10d) of planar form, **characterised in that** the fixing bolt (9) is so constructed that the fixing bolt (9) is mechanically positively introducible into the sensor bore (9) in such a way that the longitudinal side (10a) faces a hot side of the component section (11), and that the longitudinal edges (13a, 13b) of the longitudinal side (10a) are disposed in continuous physical contact with a bore wall (12), which surrounds the sensor bore (2), of the component section (11), wherein an outer diameter of the protective tube (8) and an outer contour, which extends in longitudinal direction of the fixing bolt (9), of the fixing bolt (9) are matched to one another in such a way that the protective bolt (8) introduced into the sensor bore (2) is clamped in place between the longitudinal side (10a) and the bore wall (12) when the fixing bolt (9) is introduced into the sensor bore (2).

2. Temperature sensor component (1) according to claim 1, **characterised in that** the fixing bolt (9) has a polygonal, particularly rectangular or square, cross-sectional area.

3. Temperature sensor component (1) according to claim 1 or 2, **characterised in that** the protective tube (8) has a circular cross-sectional area and that an outer radius of the protective tube (8) is greater than a given largest radial spacing between the longitudinal side (10a) of the fixing bolt (9) and the bore wall (12) with respect to a longitudinal centre axis of the sensor bore (2).

4. Temperature sensor component (1) according to any one of claims 1 to 3, **characterised in that** the sensor bore (2) is formed as a blind bore and that an axial length of the fixing bolt (9) and/or of the optical waveguide (7) and/or of the protective tube (8) is greater than a depth of the sensor bore (2).

5. Temperature sensor component (1) according to any one of claims 1 to 4, **characterised in that** the sensor bore (2) is formed as a stepped depth bore with at least two bore sections axially adjoining one another by way of an encircling and radially inwardly facing step, wherein the bore sections differ from one another in the diameters thereof in such a way that a diameter of a bore section arranged closer to a bore opening, which is arranged at an outer side of the temperature sensor component (1), of the sensor bore (2) is greater than a diameter of a further bore section arranged at a side, which is remote from the bore opening, of this bore section.

6. Temperature sensor component (1) according to claim 5, **characterised in that** a difference between a largest diameter of a bore section and a smallest diameter of a further bore section is less than an extent of radial compression of the protective tube (8) clamped in place between the longitudinal side (10a) of the fixing bolt (9) and the sensor bore (2).

7. Method of producing a temperature sensor component (1) for a metallurgical plant, comprising the steps:
- providing at least one metallic component;
- providing at least one temperature sensor arrangement (3) with at least one fixing bolt (9), which is mechanically positively introducible into a sensor bore (2) at a component section (11) of the component and which has at least one longitudinal side (10a, 10b, 10c, 10d) of planar form, at least one optical waveguide (7) and at least one protective tube (8), which surrounds the optical waveguide (7) with radial play in encircling manner and which together with the optical waveguide (7) introduced thereinto is introducible into the sensor bore (2), wherein the fixing bolt (9) is constructed so that the fixing bolt (9) is mechanically positively introducible into the sensor bore (2) in such a way that the longitudinal side (10a) faces a hot side of the component section (11) and longitudinal edges (13a, 13b) of the longitudinal side (10a) are disposed in continuous physical contact with a bore wall (12), which surrounds the sensor bore (2), of the component section (11), wherein an outer diameter of the protective tube (8) and an outer contour, which extends in longitudinal direction of the fixing bolt (9), of the fixing bolt (9) are matched to one another in such a way that the protective tube (8) introduced into the sensor bore (2) is clamped in place between the longitudinal side (10a) and the bore wall (12) when the fixing bolt (9) is mechanically positively introduced into the sensor bore (2);
- forming at least one sensor bore (2) at the component section (11); and
- at least partly introducing the temperature sensor arrangement (3) into the sensor bore (2), wherein the fixing bolt (9) and the temperature sensor arrangement (3) are introduced simultaneously or in succession into the sensor bore (2).

8. Method according to claim 7, **characterised in that** the sensor bore (2) is formed as a blind bore and that an axial length of the fixing bolt (9) and/or of the optical waveguide (7) and/or of the protective tube (8) is selected in such a way that the axial length is greater than a depth of the sensor bore (2).

9. Method according to claim 7 or 8, **characterised in that** the sensor bore (2) is formed as a stepped depth bore with at least two bore sections which axially adjoin one another by way of an encircling and radially inwardly facing step, wherein the bore sections differ from one another in their diameters in such a way that a diameter of a bore section arranged closer to a bore opening, which is arranged at an outer side of the temperature sensor component (1), of the sensor bore (2) is larger than a diameter of a further bore section arranged on a side, which is remote from the bore opening, of this bore section.

10. Method according to claim 9, **characterised in that** the bore sections are formed in such a way that a difference between a largest diameter of a bore section and a smallest diameter of a further bore section is less than an extent of radial compression of the protective tube (8) clamped in place between the longitudinal side (10a) of the fixing bolt (9) and the sensor bore (2).

## Revendications

1. Composant (1) faisant office de capteur de la température destiné à une installation métallurgique, qui présente au moins un alésage pour capteur (2) sur un tronçon de composant (11) du composant (1) faisant office de capteur de la température et au moins un agencement de détection de la température (3) qui a été introduit au moins en partie dans l'alésage pour capteur (2), qui est destiné à la mesure d'une température du tronçon de composant (11) ; dans lequel l'agencement de détection de la température (3) présente au moins un guide d'onde optique (7), au moins un tube de protection (8) qui entoure en position périphérique avec un jeu radial le guide d'onde optique (7), tube qui peut être introduit dans l'alésage pour capteur (2) de manière conjointe avec le guide d'onde optique (7) qui y a été introduit, et au moins un boulon de fixation (9) qui peut être introduit dans l'alésage pour capteur (2) ; dans lequel le boulon de fixation (9) présente au moins un côté longitudinal qui possède une configuration de forme plane (10a, 10b, 10c, 10d), **caractérisé en ce que** le boulon de fixation (9) est réalisé d'une manière telle que le boulon de fixation (9) peut être introduit par complémentarité de forme dans l'alésage pour capteur (2) d'une manière telle que le côté longitudinal (10a) est orienté vers un côté chaud du tronçon de composant (11); et **en ce que** les bords longitudinaux (13a, 13b) du côté longitudinal (10a) entrent de manière constante en contact physique avec une paroi d'alésage (12) du tronçon de composant (11), qui entoure l'alésage pour capteur (2) ; dans lequel un diamètre externe du tube de protection (8) et un contour externe du boulon de fixation (9) qui s'étend dans la direction longitudinale du boulon de fixation (9) présentent une coordination réciproque d'une manière telle que le tube de protection (8) qui a été introduit dans l'alésage pour capteur (2), lorsque le boulon de fixation (9) a été introduit par complémentarité de forme dans l'alésage pour capteur (2), est enserré entre le côté longitudinal (10a) et la paroi (12) de l'alésage.

2. Composant (1) faisant office de capteur de la température selon la revendication 1, **caractérisé en ce que** le boulon de fixation (9) présente une surface en section transversale de forme polygonale, en particulier de forme rectangulaire ou de forme carrée.

3. Composant (1) faisant office de capteur de la température selon la revendication 1 ou 2, **caractérisé en ce que** le tube de protection (8) présente une surface en section transversale en forme d'anneau circulaire; et **en ce qu'**un rayon externe du tube de protection (8) est supérieur une distance radiale supérieure que l'on obtient par rapport à un axe médian longitudinal de l'alésage pour capteur (2), entre le côté longitudinal (10a) du boulon de fixation (9) et la paroi (12) de l'alésage.

4. Composant (1) faisant office de capteur de la température selon l'une quelconque des revendications 1 à 3, **caractérisé en ce que** l'alésage pour capteur (2) est réalisé sous la forme d'un alésage borgne ; et **en ce qu'**une longueur axiale du boulon de fixation (9) et/ou du guide d'onde optique (7) et/ou du tube de protection (8) est supérieure à une profondeur de l'alésage pour capteur (2).

5. Composant (1) faisant office de capteur de la température selon l'une quelconque des revendications 1 à 4, **caractérisé en ce que** l'alésage pour capteur (2) est réalisé sous la forme d'un alésage profond du type à gradins qui comprend au moins deux tronçons d'alésage axiaux disposés en position réciproquement limitrophe qui s'étendent sur un gradin disposé en position périphérique et orienté en direction radiale vers l'intérieur ; dans lequel les tronçons d'alésage se différencient l'un de l'autre, en ce qui concerne leurs diamètres, d'une manière telle qu'un diamètre d'un tronçon d'alésage, qui est situé plus près d'une ouverture d'alésage de l'alésage pour capteur (2), qui est prévue sur un côté externe du composant (1) faisant office de capteur de la température, est supérieur à un diamètre d'un autre tronçon d'alésage qui est disposé sur un côté de ce tronçon d'alésage, qui se détourne de l'ouverture de l'alésage.

6. Composant (1) faisant office de capteur de la température selon la revendication 5, **caractérisé en ce qu'**une différence entre un diamètre maximal d'un tronçon d'alésage et un diamètre minimal d'un autre tronçon d'alésage est inférieur à une dimension d'une compression radiale du tube de protection (8) qui est enserré entre le côté longitudinal (10a) du boulon de fixation (9) et l'alésage pour capteur (2).

7. Procédé destiné à la fabrication d'un composant (1) faisant office de capteur de la température pour une installation métallurgique, qui présente les étapes dans lesquelles :
- on procure au moins un composant métallique ;
- on procure au moins un agencement de détection de la température (3) qui comprend : au moins un boulon de fixation (9) qui peut être introduit par complémentarité de forme dans un alésage pour capteur (2) sur un tronçon de composant (11) du composant, qui présente au moins un côté longitudinal qui possède une configuration de forme plane (10a, 10b, 10c, 10d) ; au moins un guide d'onde optique (7) et au moins un tube de protection (8) qui entoure en position périphérique avec un jeu radial le guide d'onde optique (7), tube qui peut être introduit dans l'alésage pour capteur (2) de manière conjointe avec le guide d'onde optique (7) qui y a été introduit; dans lequel le boulon de fixation (9) est réalisé d'une manière telle : que le boulon de fixation (9) peut être introduit par complémentarité de forme dans l'alésage pour capteur (2) d'une manière telle que le côté longitudinal (10a) est orienté dans la direction d'un côté chaud du tronçon (11) du composant ; et que des bords longitudinaux (13a, 13b) du côté longitudinal (10a) entrent de manière continue en contact physique avec une paroi (12) de l'alésage qui entoure l'alésage pour capteur (2) ; dans lequel un diamètre externe du tube de protection (8) et un contour externe du boulon de fixation (9) qui s'étend dans la direction longitudinale du boulon de fixation (9) présentent une coordination réciproque d'une manière telle que le tube de protection (8) qui a été introduit dans l'alésage pour capteur (2), lorsque le boulon de fixation (9) a été introduit par complémentarité de forme dans l'alésage pour capteur (2), est enserré entre le côté longitudinal (10a) et la paroi (12) de l'alésage ;
- on réalise au moins un alésage pour capteur (2) dans le tronçon (11) du composant ; et
- on introduit au moins en partie l'agencement de détection de la température (3) dans l'alésage pour capteur (2) ; dans lequel le boulon de fixation (9) et l'agencement de détection de la température (3) sont introduits de manière simultanée ou de manière successive dans l'alésage pour capteur (2).

8. Procédé selon la revendication 7, **caractérisé en ce que** l'alésage pour capteur (2) est réalisé sous la forme d'un alésage borgne ; et **en ce que** l'on sélectionne une longueur axiale du boulon de fixation (9) et/ou du guide d'onde optique (7) et/ou du tube de protection (8) d'une manière telle que la longueur axiale est supérieure à une profondeur de l'alésage pour capteur (2).

9. Procédé selon la revendication 7 ou 8, **caractérisé en ce que** l'alésage pour capteur (2) est réalisé sous la forme d'un alésage profond du type à gradins qui comprend au moins deux tronçons d'alésage axiaux disposés en position réciproquement limitrophe qui s'étendent sur un gradin disposé en position périphérique et orienté en direction radiale vers l'intérieur ; dans lequel les tronçons d'alésage se différencient l'un de l'autre en ce qui concerne leurs diamètres, d'une manière telle qu'un diamètre d'un tronçon d'alésage, qui est situé plus près d'une ouverture d'alésage de l'alésage pour capteur (2), qui est prévue sur un côté externe du composant (1) faisant office de capteur de la température, est supérieur à un diamètre d'un autre tronçon d'alésage qui est disposé sur un côté de ce tronçon d'alésage, qui se détourne de l'ouverture de l'alésage.

10. Procédé selon la revendication 9, **caractérisé en ce que** l'on réalise les tronçons de l'alésage d'une manière telle qu'une différence entre un diamètre maximal d'un tronçon d'alésage et un diamètre minimal d'un autre tronçon d'alésage est inférieur à une dimension d'une compression radiale du tube de protection (8) qui est enserré entre le côté longitudinal (10a) du boulon de fixation (9) et l'alésage pour capteur (2).
